# EUROPEAN PATENT APPLICATION

(11) **EP 4 027 470 A1**
(43) Date of publication of application: **13.07.2022**
(21) Application number: 22150006.9
(22) Date of filing: 03.01.2022
(51) Int. Cl.: H02G 3/04, H02G 1/08, H02G 3/06

(54) **CORRUGATED-TUBE PROTECTIVE MEMBER**

(30) Priority: 07.01.2021 JP 2021001218
(71) Applicant: Yazaki Corporation, Minato-ku Tokyo 108-8333 (JP)
(72) Inventor: Takagi, Ayumu, Toyota-shi, Aichi (JP); Nomoto, Takashi, Toyota-shi, Aichi (JP); Yoshimura, Katsuya, Toyota-shi, Aichi (JP)
(74) Representative: Grünecker Patent- und Rechtsanwälte PartG mbB

(57) **Abstract**

A corrugated-tube protective member (1) includes a tubular main body (7) configured to be arranged inside of an end part of a corrugated tube (3). At least one portion in a circumferential direction of the main body (7) has a dividing portion (9) dividing the main body (7) in the circumferential direction. The dividing portion (9) includes an engagement portion (15). The engagement portion (15) holds a first dividing surface (11) and a second dividing surface (13) facing each other in circumferential direction of the main body (7) in an engaged state. The first dividing surface (11) includes a first top part (21) protruding toward the second dividing surface (13) side. The second dividing surface (13) includes a second bottom part (23) indented to an opposite side of the first dividing surface (11) and configured to engage with the first top part (21). The engagement portion (15) includes a locked part (17) formed on the first top part (21) and an elastically deformable locking part (19) formed on the second bottom part (23).

## Description

### TECHNICAL FIELD

The present invention relates to a corrugated-tube protective member.

### BACKGROUND

Conventionally, a corrugated-tube protective member having a tubular shape configured to be arranged at an inner circumference of an end part of a corrugated tube and configured to insert an electric wire through a tubular portion as a main body is known (see Japanese Patent Laid-Open No. 2019-75946). A dividing portion dividing the tubular portion in a circumferential direction is provided at one portion in the circumferential direction of the tubular portion.

The dividing portion is provided with an engagement portion for holding the divided surfaces facing each other in the circumferential direction of the tubular portion. The engagement portion has a coupling recess as a locked part and a coupling projection as a locking part formed to be elastically deformable and configured to engage with the coupling recess.

In such a corrugated-tube protective member, an electric wire is arranged inside the tubular portion in a state where the tubular portion is divided in the circumferential direction at the dividing portion. The tubular shape of the tubular portion is held by engaging the coupling recess and the coupling projection in a state where the dividing surfaces facing each other in the circumferential direction are engaged, and the electric wire is inserted through the tubular portion.

### SUMMARY

In the conventional corrugated-tube protective member, a dividing surfaces facing in the circumferential direction of the main body is formed linearly along a longitudinal direction of the main body in the dividing portion. An elastically deformable locking part is largely exposed to the dividing surface, which is linearly divided.

Therefore, when the main body is circumferentially divided by the dividing portion, an external force may be applied to the locking part, such as interference of the locking part with a peripheral member. When an external force is applied to the locking part, deformation or damage may occur to the locking part, and the engagement at the engagement portion may become unstable.

One or more aspects of the present invention are directed to providing a corrugated-tube protective member configured to stabilize the engagement at an engagement portion.

A corrugated-tube protective member according to the present invention includes a main body with a tubular shape configured to be arranged at an inner circumference of an end part of a corrugated tube and configured to insert an electric wire through the main body. At least one portion in a circumferential direction of the main body is provided with a dividing portion dividing the main body in the circumferential direction. The dividing portion is provided with an engagement portion, the engagement portion being a portion configured to hold a first dividing surface and a second dividing surface facing each other in circumferential direction of the main body in an engaged state. The engagement portion comprises a locked part and a locking part formed to be elastically deformed and configured to engage with the locked part. The first dividing surface includes at least a first top part protruding toward the second dividing surface side. The second dividing surface includes a second bottom part indented to an opposite side of the first dividing surface and configured to engage with the first top part. The locked part is formed on the first top part. The locking part is formed on the second bottom part.

In some embodiments, the first dividing surface may further include a pair of first bottom parts arranged on both sides of the first top part and indented to an opposite side of the second dividing surface. The second dividing surface may further include a pair of second top parts arranged on both sides of the second bottom part and protruding toward the first dividing surface side and is configured to engage with the pair of first bottom parts. A tip of the locking part on the first-dividing-surface side may be formed to be on the second-bottom-part side relative to a tip of the pair of second top parts.

In some embodiments, the first top part, the pair of first bottom parts, the second bottom part, and the pair of second top parts may be formed of curved surfaces.

In some embodiments, the first top part and the pair of first bottom parts may be connected by a pair of first inclined surfaces inclined in a symmetrical shape and the second bottom part and the pair of second top parts may be connected by a pair of second inclined surfaces configured to engage with the pair of first inclined surfaces.

According to the above configuration, a corrugated-tube protective member configured to stabilize the engagement at the engagement portion is provided.

### BRIEF DESCRIPTION OF THE DRAWINGS

FIG. 1 is a side view of a corrugated-tube protective member according to one or more embodiments in a state the corrugated-tube protective member is attached to a corrugated tube;
FIG. 2 is a perspective view of the corrugated-tube protective member according to one or more embodiments;
FIG. 3 is a side view of the corrugated-tube protective member according to one or more embodiments;
FIG. 4 is a detailed view of the corrugated-tube protective member according to the present embodiment; and
FIG. 5 is a perspective view of the corrugated-tube protective member according to one or more embodiments in a state an electric wire is exposed from the corrugated-tube protective member.

### DETAILED DESCRIPTION

Various embodiments will be described hereinafter with reference to the accompanying drawings.

Hereinafter, the corrugated-tube protective member according to one or more embodiments will be described in detail with reference to the drawings. The dimensional ratio of the drawings is may differ from the actual ratio.

The corrugated-tube protective member 1 is provided with a main body 7 with a tubular shape configured to be arranged at an inner circumference of an end part of a corrugated tube 3 and configured to insert an electric wire 5 through the main body 7. At least one portion in a circumferential direction of the main body 7 is provided with a dividing portion 9 dividing the main body 7 in the circumferential direction.

Further, the dividing portion 9 is provided with an engagement portion 15, the engagement portion 15 being a portion configured to hold a first dividing surface 11 and a second dividing surface 13 facing each other in a circumferential direction of the main body 7 in an engaged state. The engagement portion 15 has a locked part 17 and a locking part 19 formed to be elastically deformed and configured to engage with the locked part 17.

Further, the first dividing surface 11 includes at least a first top part 21 projecting toward the second dividing surface 13 side. The second dividing surface 13 includes a second bottom part 23 indented to an opposite side of the first dividing surface 11 and configured to engage with the first top part 21.

The locked portion 17 is formed on the first top part 21, and the locking part 19 is formed on the second bottom part 23.

The first dividing surface 11 further includes a pair of first bottom parts 25 arranged on both sides of the first top part 21 and indented to a side opposite to the second dividing surface 13. Further, the second divided surface 13 further includes a pair of second top parts 27 arranged on both sides of the second bottom part 23 and protruding toward the first dividing surface 11 side and is configured to engage with the pair of first bottom parts 25.

A tip of the locking part 19 on the first dividing surface 11 side is formed to be on the second bottom part 23 side relative to a tip of the pair of second top parts 27.

The first top part 21, the pair of first bottom parts 25, the second bottom part 23, and the pair of second top parts 27 are formed of curved surfaces.

Further, the first top part 21 and the pair of first bottom parts 25 are connected by a pair of first inclined surfaces 29 inclined in a symmetrical shape. The second bottom part 23 and the pair of second top parts 27 are connected by a pair of second inclined surfaces 31 configured to engage with the pair of first inclined surfaces 29.

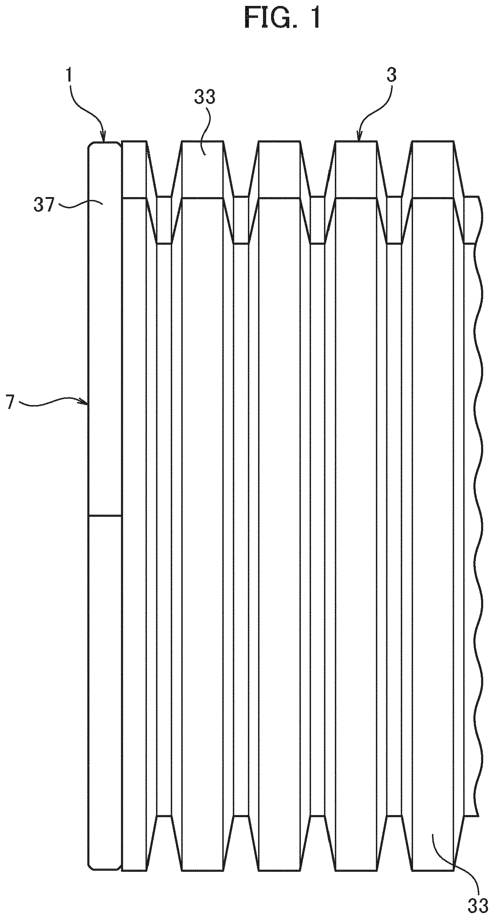

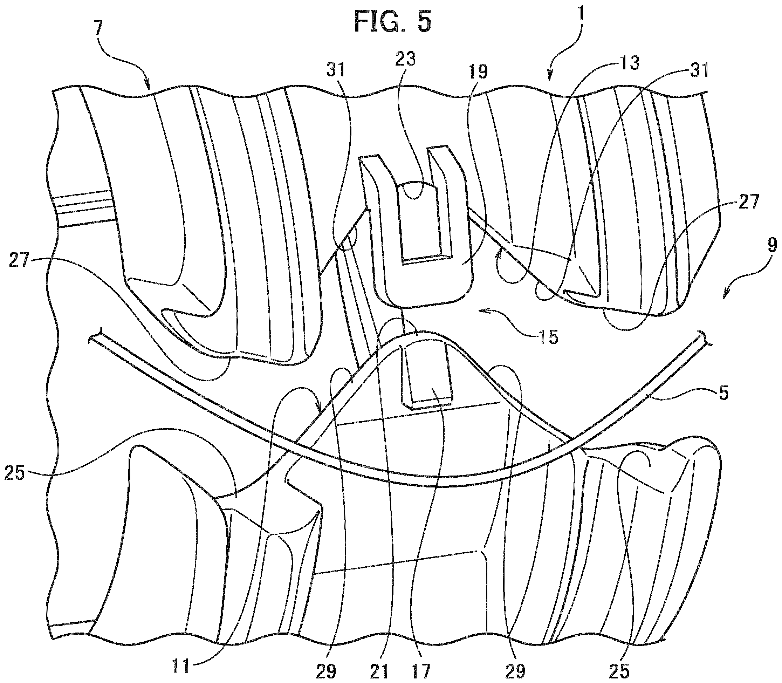

As illustrated in FIG. 1, the corrugated tube 3 has a plurality of ridge portions 33 disposed along a longitudinal direction. The corrugated tube 3 is flexible. The corrugated tube 3 prevent interference between an electric wire 5 ( see FIG. 5) and a peripheral member in a state that the electric wire 5 for electrically connecting a power source and an apparatus mounted on a vehicle is inserted through the corrugated tube 3, for example.

In the corrugated tube 3, a slit (not illustrated) into which an electric wire 5 can be inserted is formed along the longitudinal direction of the corrugated tube 3. By forming the slit as described above, the corrugated tube 3 can be attached to an intermediate portion of the electric wire 5 even in a state the electric wire 5 is routed in a vehicle. In some embodiments, the corrugated tube 3 may not be provided with a slit.

When an external force is applied to the corrugated tube 3 from the outside in the radial direction, the corrugated tube 3 may be deformed so as to collapse toward the inside. In particular, if deformation occurs at the end part of the corrugated tube 3, the corrugated tube 3 may not be attached to a mounting member (not illustrated) such as a protector on which the electric wire 5 is routed. Therefore, the corrugated-tube protective member 1 is arranged at the inner circumference of the end part of the corrugated tube 3.

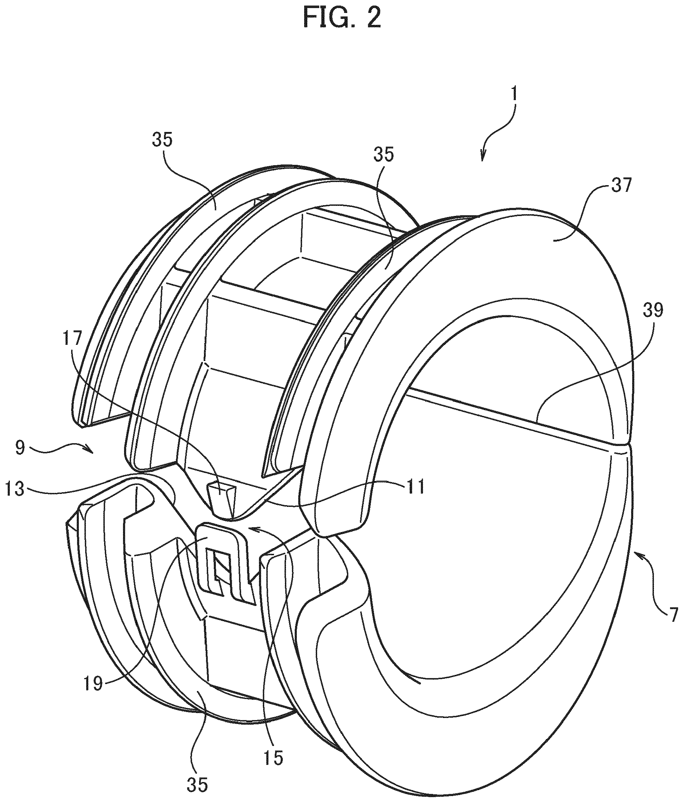

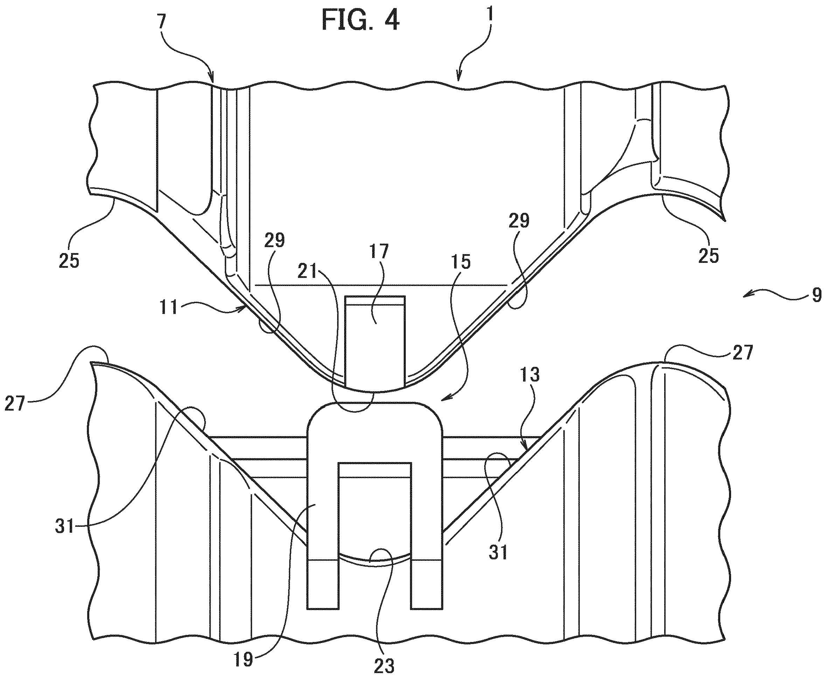

As illustrated in FIGS. 1 to 5, the corrugated-tube protective member 1 is made of an insulating material such as synthetic resin having rigidity higher than rigidity of the corrugated tube 3. The corrugated-tube protective member 1 includes a main body 7, a rib 35, and a stopper 37.

The main body 7 is formed into a tubular shape having an outer diameter smaller than an inner diameter of the corrugated tube 3 and configured to be inserted into the corrugated tube 3. The main body 7 is divided in the circumferential direction at one dividing portion 9 in the circumferential direction so as to have a first dividing surface 11 and a second dividing surface 13 opposed to each other in the circumferential direction. In the main body 7, a part opposed to the dividing portion 9 in the radial direction is connected via a hinge 39 so as the main body 7 to open and close.

By providing the dividing portion 9 to the main body 7 as described above, the corrugated-tube protective member 1 can be attached to the intermediate portion of the electric wire 5 even in a state the electric wire 5 is routed in the vehicle. The main body 7 is held in a state where the first dividing surface 11 and the second dividing surface 13 of the dividing portion 9 is engaged through the engagement portion 15. The rib 35 and the stopper 37 are provided on the outer circumference of the main body 7.

The rib 35 is provided on the outer circumference of the main body 7 continuous in the circumferential direction of the main body 7 and protrudes from the outer circumferential surface of the main body 7 toward the outside. The rib 9 and the main body 7 are formed as a single member being continuous with each other. An outer diameter of the rib 35 is set smaller than the outer diameter of the ridge portion 33 of the corrugated tube 3. The rib 35 is disposed inside the ridge portion 33 in a state the main body 7 is inserted into the inner circumference of the end part of the corrugated tube 3.

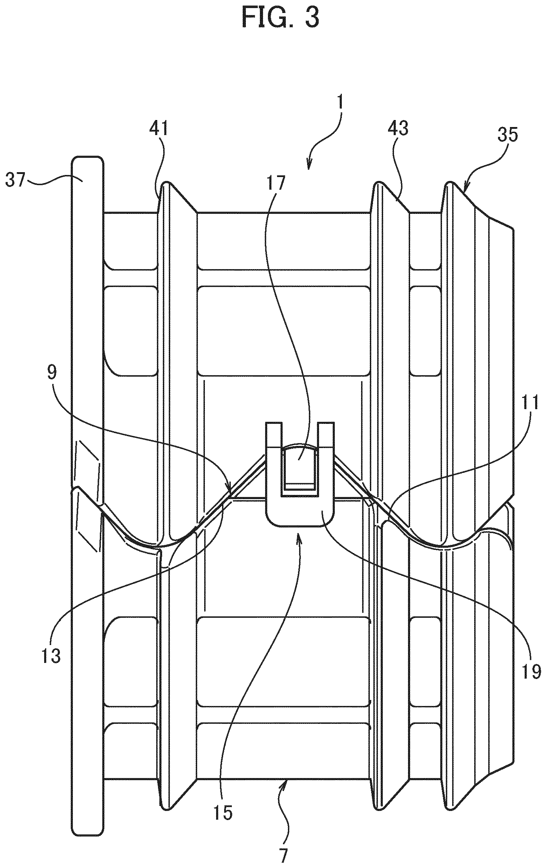

The surface of the rib 35 in the direction of removal of the main body 7 with respect to the corrugated tube 3 (a left side surface of the rib 35 illustrated in FIG. 3) is a contacted surface 41 formed substantially perpendicular to the outer circumferential surface of the main body 7. The contacted surface 41 is configured to engage with an inner surface facing the contacted surface 41 on the inner circumference of the ridge portion 33 inside the ridge portion 33.

The main body 7 is prevented from coming off the corrugated tube 3 by the engagement of the rib 35 and the ridge portion 33. A plurality of ribs 35 (three ribs in this embodiment) are provided along the longitudinal direction of the main body 7. By providing a plurality of ribs 35 as described above, a plurality of engagement portions between the ribs 35 and the ridge portions 33 can be obtained, and the corrugated-tube protective member 1 can be stably held on the corrugated tube 3.

The surface of the rib 35 in the insertion direction of the main body 7 into the corrugated tube 3 (a right side surface of the rib 35 illustrated in FIG. 3) is an inclined surface 43 inclined upward from the front side in the insertion direction toward the rear side in the insertion direction with respect to the outer circumferential surface of the main body 7. That is, the inclined surface 43 is inclined so as to increase the outer diameter of the corrugated-tube protective member 1 from the front side toward the rear side in the insertion direction. By providing the inclined surface 43 on the rib 35 as described above, the main body 7 can be stably inserted into the corrugated tube 3, and the assemblability of the corrugated-tube protective member 1 to the corrugated tube 3 can be improved.

The stopper 37 is provided on the outer circumference of the end part of the main body 7 continuous in the circumferential direction of the main body 7 and protrudes from the outer circumferential surface of the main body 7 toward the outside. The stopper 11 and the main body 7 are formed as a single member being continuous with each other. An outer diameter of the stopper 37 is set equal to or larger than the outer diameter of the ridge portion 33 of the corrugated tube 3. In some embodiments, the outer diameter of the stopper 37 may be set equal to the outer diameter of the ridge portion 33 of the corrugated tube 3. The stopper 37 is exposed from the corrugated tube 3 in a state that the main body 7 is inserted into the inner circumference of the end part of the corrugated tube 3, and is arranged to face the end surface in the longitudinal direction of the corrugated tube 3.

By arranging the stopper 37 in a manner described above, the stopper 37 abuts the end surface of the corrugated tube 3, when the main body 7 is to be excessively inserted into the corrugated tube 3. The main body 7 can be prevented from being excessively inserted into the corrugated tube 3 by abutting the stopper 37 with the end face of the corrugated tube 3.

In a corrugated-tube protective member 1 of one or more embodiments, the engaged state of the first dividing surface 11 and the second dividing surface 13 is configured to be hold by the engagement portion 15. The engagement portion 15 includes a locked part 17 provided formed on the first divided surface 11 side and a locking part 19 provided on the second divided surface 13 side.

The locked part 17 is formed protrudes outwardly from the outer surface of the main body 7 on the first divided surface 11 side. The locked part 17 and the main body 7 are formed as a single member being continuous with each other. The surface of the locked part 17 on the second divided surface 13 side is an inclined surface, and the surface on the first divided surface 11 side is a contacting surface, the contacting surface formed vertically from the outer surface of the main body 7.

The locking part 19 is formed to be elastically deformable on the second dividing surface 13 side, and extends in a frame-like shape configured to engage with the locked portion 17 toward the first divided surface 11 side. The locking part 19 and the main body 7 are formed as a single member being continuous with each other. When closing the main body 7 in a manner that the first dividing surface 11 and the second dividing surface 13 are in a process of engaging each other, the locking part 19 slides onto the inclined surface of the locked part 17 and the locking part 19 is elastically deformed.

When the main body 7 is closed in a manner that the first dividing surface 11 and the second dividing surface 13 engage each other, the locking part 19 is restored from the elastic deformation and engaged with the contacting surface of the locked part 17. By the engagement of the locked part 17 and the locking pat 19, the state in which the first dividing surface 11 and the second dividing surface 13 engage each other, that is, the state in which the main body 7 is closed and the main body 7 is in an annular state is retained.

Here, for example, when the first dividing surface 11 and the second dividing surface 13 are formed linearly along the longitudinal direction of the main body 7, the exposure amount of the locking part 19 from the second dividing surface 13 increases in order to be engaged with the locked part 17 positioned on the side of the first dividing surface 11. When the exposure of the locking part 19, which is elastically deformable, is large, a possibility that an external force is applied to the locking part 19 increases, and the locking part 19 may interfere with a peripheral member in a state where the main body 7 is opened. When an external force is applied to the locking part 19, deformation or damage may occur to the locking part 19, and engagement in the engagement portion 15 may become unstable.

The first dividing surface 11 has the first top part 21, the pair of first bottom parts 25, and the pair of first inclined surfaces 29. The second dividing surface 13 has the second bottom part 23, the pair of second top parts 27, and the pair of second inclined surfaces 31.

The first top part 21 is disposed at a center portion in the longitudinal direction of the main body 7 on the first dividing surface 11. The first top part 21 is formed as a single member being continuous with the main body 7 and protrudes toward the second dividing surface 13 side. A tip side of the first top part 21 is formed of a curved surface.

The pair of first bottom parts 25 are disposed on both sides of the first top part 21 with respect to the longitudinal direction of the main body 7 on the first dividing surface 11. The pair of first bottom parts 25 are indented to the opposite side of the second dividing surface 13 in the main body 7. Bottom sides of the pair of first bottom parts 25 are formed of curved surfaces.

The pair of first inclined surfaces 29 respectively connect the first top part 21 and the pair of first bottom parts 25 on the first dividing surface 11. The pair of first inclined surfaces 29 are inclined with respect to the longitudinal direction of the main body 7 so as to form a symmetrical shape with the first top part 21 as a symmetry plane.

In such a first dividing surface 11, the locked part 17 is formed on the first top part 21 protruding toward the second dividing surface 13 side. Therefore, in a state where the main body 7 is closed, since the locked part 17 is disposed adjacent on the second dividing surface 13 side, the amount of protrusion of the locking part 19 formed to be elastically deformable toward the first dividing surface 11 side can be reduced.

The second bottom part 23 is disposed at a center portion in the longitudinal direction of the main body 7 on the second dividing surface 13. The second bottom part 23 is formed so as to be indented to the side opposite to the first dividing surface 11 with respect to the main body 7, and is configured to be engaged with the first top part 21 in a state where the main body 7 is closed. A bottom side of the second bottom part 23 is formed of a curved surface.

The pair of second top parts 27 are disposed on both sides of the second bottom part 23 with respect to the longitudinal direction of the main body 7 on the second dividing surface 13. The pair of second top parts 27 are formed as a single member being continuous with the main body 7 and protrudes toward the first dividing surface 11 side, and is configured to be engaged with the pair of first bottom parts 25 in a state where the main body 7 is closed. Tips of the pair of second top parts 27 are formed of curved surfaces.

The pair of second inclined surfaces 31 respectively connect the second bottom part 23 and the pair of second top parts 27 on the second dividing surface 13. The pair of second inclined surfaces 31 are inclined with respect to the longitudinal direction of the main body 7 so as to form a symmetrical shape with the second bottom part 23 as a symmetry plane, and is configured to be engaged with the pair of first inclined surfaces 29 in a state where the main body 7 is closed.

In such a second dividing surface 13, the locking part 19 is formed on the second bottom part 23 at a position retreat from the first dividing surface 11 side. Therefore, in a state that the main body 7 is opened, the exposure amount of the locking part 19 reduces, and the application of external force to the locking part 19 can be prevented.

The tip of the locking part 19 on the first dividing surface 11 side is formed to be on the second bottom part 23 side relative to the tip of the pair of second top parts 27. Therefore, the locking part 19 is in a state where the main body 7 is arranged around the locking part 19 and does not expose from the pair of second top parts 27, and the locking part 19 can be further protected.

If the first dividing surface 11 and the second dividing surface 13 are formed linearly, there is a possibility that the electric wire 5 gets on the first dividing surface 11 or the second dividing surface 13, and there is a possibility that the electric wire 5 gets caught when the main body 7 is closed.

The first dividing surface 11 has a first top part 21, and the second dividing surface 13 has a second bottom part 23. That is, the first dividing surface 11 and the second dividing surface 13 are not linearly formed. Therefore, even if the electric wire 5 gets on the first dividing surface 11 or the second dividing surface 13, the electric wire 5 returns to the inner side of the main body 7 or, as illustrated in FIG. 5, the electric wire 5 comes out to the outside of the main body 7 and can be visually checked. By forming the first dividing surface 11 and the second dividing surface 13 in this manner, the electric wire 5 is prevented from getting on the first dividing surface 11 or the second dividing surface 13, and to prevent the electric wire 5 from being caught when the main body 7 is closed.

Here, if the first top part 21, the pair of first bottom parts 25, the second bottom part 23, and the pair of second top parts 27 are formed linearly or sharply, there is a possibility that the electric wire 5 is caught on the linear surface or on the sharp portion.

In the one or more embodiments, the first top part 21, the pair of first bottom parts 25, the second bottom part 23, and the pair of second top parts 27 are formed of curved surfaces. Therefore, the electric wire 5 is prevented from getting on or from being caught on the first top part 21, the pair of the first bottom parts 25, the second bottom part 23, and the pair of the second top parts 27.

Here, if surfaces corresponding to the pair of first inclined surfaces 29 and the pair of second inclined surfaces 31 are formed perpendicular to the first top part 21 and the second bottom part 23, there is a possibility that the electric wire 5 stays on the perpendicular surface.

In the one or more embodiments, the first top part 21 and the pair of first bottom parts 25 are connected by the pair of first inclined surfaces 29 inclined symmetrically. The second bottom part 23 and the pair of second top parts 27 are connected by the pair of second inclined surfaces 31 configured to engage with the pair of first inclined surfaces 29. Therefore, the electric wire 5 can be prevented from remaining on the pair of first inclined surfaces 29 and the pair of second inclined surfaces 31, and the electric wire 5 can be prevented from being caught.

In the corrugated-tube protective member 1, the locked portion 17 is formed on the first top part 21, and the locking portion 19 is formed on the second bottom part 23. Therefore, in a state where the first dividing surface 11 and the second dividing surface 13 engage each other, since the locked portion 17 is disposed adjacent on the second dividing surface 13 side, the amount of protrusion of the locking part 19 toward the first dividing surface 11 side can be reduced. In addition, in the state where the second dividing surface 13 is opened, the locking part 19, which is elastically deformable, is arranged at the retracted position of the second dividing surface 13, so that the exposure amount of the locking part 19 can be reduced, and the application of external force to the locking part 19 can be prevented.

Accordingly, in the corrugated-tube protective member 1, deformation and damage of the locking part 19, which is elastically deformable, can be prevented, and engagement of the engagement portion 15 can be stabilized.

The first dividing surface 11 has the first top part 21, and the second dividing surface 13 has the second bottom portion 23. Therefore, the first dividing surface 11 and the second dividing surface 13 are not formed linearly, and the electric wire 5 can hardly get on the first dividing surface 11 and the second dividing surface 13, and the electric wire 5 can be prevented from being caught between the first dividing surface 11 and the second dividing surface 13.

Further, the tip of the locking part 19 on the first dividing surface 11 side is formed to be on the second bottom portion 23 side relative to a tip of the pair of second top parts 27. Therefore, the locking part 19 is not exposed from the pair of second top parts 27. Therefore, when the second dividing surface 13 is opened, the main body 7 is arranged around the locking part 19, and the locking part 19 can be further protected.

The first top part 21, the pair of first bottom parts 25, the second bottom part 23, and the pair of second top parts 27 are formed by curved surfaces. Therefore, the electric wire 5 is prevented from getting on or from being caught on the first top part 21, the pair of first bottom parts 25, the second bottom part 23, and the pair of second top parts 27, and to prevent the electric wire 5 from being caught between the first dividing surface 11 and the second dividing surface 13.

Further, the first top part 21 and the pair of first bottom parts 25 are connected by the pair of first inclined surfaces 29 inclined symmetrically. The second bottom part 23 and the pair of second top parts 27 are connected by the pair of second inclined surfaces 31 configured to engage with the pair of first inclined surfaces 29. Therefore, the electric wire 5 can be prevented from remaining on the pair of first inclined surfaces 29 or the pair of second inclined surfaces 31, and the electric wire 5 can be prevented from being caught between the first dividing surface 11 and the second dividing surface 13.

Although the present embodiment has been described above, the present embodiment is not limited thereto, and various modifications can be made within the scope of the gist of the present embodiment.

For example, in the present embodiment, one dividing portion 9 is provided in the circumferential direction of the main body 7, but the present invention is not limited thereto, and two or more dividing portions may be provided in the circumferential direction of the main body. In this case, an engagement portion may be provided in each of the dividing portions. In addition, a plurality of engagement portions may be provided for one dividing portion.

Although the first top part 21 and the second bottom part 23 are provided with one each for the first dividing surface 11 and the second dividing surface 13, the first top part and the second bottom part may be provided with two or more each for the first dividing surface and the second dividing surface.

Although the present invention has been described above by reference to the embodiment, the present invention is not limited to those and the configuration of parts can be replaced with any configuration having a similar function, as long as they lie within the scope of the claims.

## Claims

1. A corrugated tube protective member (1) comprising:
a main body (7) with a tubular shape configured to be arranged at an inner circumference of an end part of a corrugated tube (3) and configured to insert an electric wire (5) through the main body (7), wherein
at least one portion in a circumferential direction of the main body (7) is provided with a dividing portion (9) dividing the main body (7) in the circumferential direction,
the dividing portion (9) is provided with an engagement portion (15), the engagement portion (15) being a portion configured to hold a first dividing surface (11) and a second dividing surface (13) facing each other in a circumferential direction of the main body (7) in an engaged state,
the engagement portion (15) comprises a locked part (17) and a locking part (19) formed to be elastically deformable and configured to engage with the locked part (17),
the first dividing surface (11) includes at least a first top part (21) protruding toward the second dividing surface (13) side,
the second dividing surface (13) includes a second bottom part (23) indented to an opposite side of the first dividing surface (11) and configured to engage with the first top part (21),
the locked part (17) is formed on the first top part (21), and
the locking part (19) is formed on the second bottom part (23).

2. The corrugated tube protective member (1) according to claim 1, wherein
the first dividing surface (11) further includes a pair of first bottom parts (25) arranged on both sides of the first top part (21) and indented to an opposite side of the second dividing surface (13),
the second dividing surface (13) further includes a pair of second top parts (27) arranged on both sides of the second bottom part (23) and protruding toward the first dividing surface (11) side and is configured to engage with the pair of first bottom parts (25), and
a tip of the locking part (19) on the first-dividing-surface (11) side is formed to be on the second-bottom-part (25) side relative to a tip of the pair of second top parts (27).

3. The corrugated tube protective member (1) according to claim 2, wherein
the first top part (21), the pair of first bottom parts (25), the second bottom part (23), and the pair of second top parts (27) are formed of curved surfaces.

4. The corrugated tube protective member (1) according to claim 2 or 3, wherein
the first top part (21) and the pair of first bottom parts (25) are connected by a pair of first inclined surfaces (29) inclined in a symmetrical shape, and
the second bottom part (23) and the pair of second top parts (27) are connected by a pair of second inclined surfaces (31) configured to engage with the pair of first inclined surfaces (29).
